# EUROPEAN PATENT APPLICATION

(11) **EP 1 482 610 A1**
(43) Date of publication of application: **01.12.2004**
(21) Application number: 03743504.7
(22) Date of filing: 27.01.2003
(51) Int. Cl.: H01S 5/026, H04B 10/04

(54) **OPTICAL TRANSMITTER AND OPTICAL MODULE**

(30) Priority: 05.03.2002 JP 2002059405
(71) Applicant: MITSUBISHI DENKI KABUSHIKI KAISHA, Tokyo 100-8310 (JP)
(72) Inventor: NODA, M., c/o Mitsubishi Denki Kabushiki Kaisha, Chiyoda-ku, Tokyo 100-8310 (JP); MOTOSHIMA, K, c/o Mitsubishi Denki K.K., Chiyoda-ku, Tokyo 100-8310 (JP)
(74) Representative: Nicholls, Michael John
(86) International application number: PCT/JP2003/000731
(87) International publication number: WO 2003/075422

(57) **Abstract**

An optical transmitter includes a semiconductor laser module (9) that outputs continuous light to be modulated, and an optical module (7) that has an electric-field-absorbing-type semiconductor optical modulator device (1) for modulating the continuous light to be modulated with a modulating electric signal supplied from a transmission line substrate and outputting a modulated optical signal. The semiconductor laser module (9) has a light intensity varying unit (9a) that variably controls the light intensity of a modulated optical signal based on the intensity of the continuous light to be modulated.

## Description

### TECHNICAL FIELD

The present invention relates to an optical transmitter and an optical module applied to an optical communication system, and using an electric-field-absorbing-type semiconductor optical modulator device.

### BACKGROUND ART

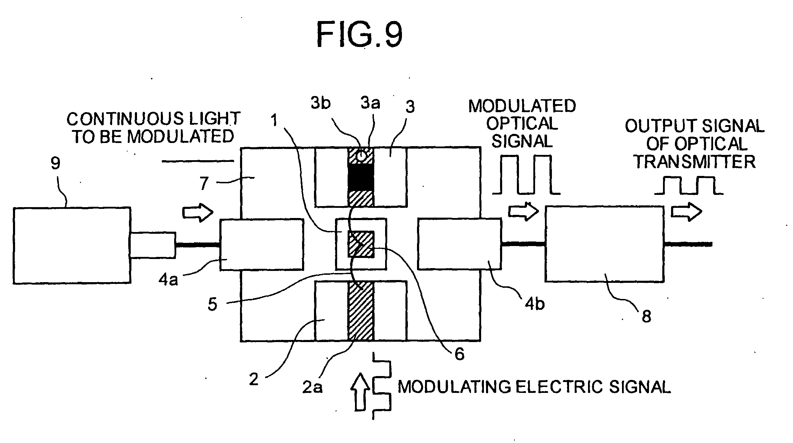

Fig. 9 is a diagram illustrating a configuration of a conventional optical transmitter (see, for example, non-patent literature 1). This optical transmitter includes an optical module 7, a variable optical attenuator 8, and a semiconductor laser module 9. The optical module 7 includes an electric-field-absorbing-type semiconductor optical modulator device 1, a transmission line substrate 2 that has a high-frequency transmission line 2a through which a modulation signal is received, and a terminating resistor substrate 3 having a resistor 3a and a through hole 3b. An input optical coupling system 4a inputs continuous light, which is to be modulated, into the semiconductor optical modulator device 1. An output optical coupling system 4b outputs the light modulated by the semiconductor optical modulator device 1 outside of the optical module 7. An input electrode 6 is provided on the semiconductor optical modulator device 1. A wire 5 electrically connects the transmission line substrate 2 and the terminating resistor substrate 3 to the input electrode 6. The semiconductor laser module 9 supplies the continuous light to the input optical coupling system 4a. The variable optical attenuator 8 controls light intensity of the modulated light output from the output optical coupling system 4b.

Continuous laser light is input into the semiconductor optical modulator device 1 from the semiconductor laser module 9 through the input optical coupling system 4a. The semiconductor optical modulator device 1 modulates the continuous laser light using such characteristics that an amount of absorption of the laser light varies according to modulating electric signals applied through the transmission line substrate 2. The modulated optical signal is output to the variable optical attenuator 8 through the output optical coupling system 4b. The variable optical attenuator 8 controls the intensity of the light and outputs the intensity-controlled light as an output of the optical transmitter.

Non-patent literature 1: "Oki technical review (40Gb/sEA modulator) No. 190" Vol. 69, No. 2, April 2002, p.65, written by Nagai Kiyoshi and Wada Hiroshi.

In recent years there is a requirement that the intensity of light of the optical transmitter can be variably controlled. The conventional optical transmitter fulfils this requirement, however, requires the variable optical attenuator 8 as an essential component for this purpose. Therefore, there is a restriction on the extent to which miniaturization is possible. One approach is to mount the variable optical attenuator 8 on the optical module 7. However, in that case, the optical module 7 becomes large.

It is an object of the present invention to provide an optical transmitter and an optical module that are compact in size and excellent in optical transmission characteristics without sacrificing the size of the optical module 7 and the number of components of the optical transmitter.

### DISCLOSURE OF THE INVENTION

An optical transmitter according to one aspect of the present invention includes a semiconductor laser module that outputs continuous light to be modulated; and an optical module including an electric-field-absorbing-type semiconductor optical modulator device that modulates the continuous light with a modulating electric signal supplied from a transmission line substrate and outputs a modulated optical signal. A light intensity varying unit that variably controls intensity of the continuous light is provided in the semiconductor laser module to thereby variably control light intensity of the modulated optical signal.

According to the above mentioned invention, the semiconductor laser module provided with the light intensity varying unit variably controls intensity of the continuous light.

An optical module according to another aspect of the present invention includes an electric-field-absorbing-type semiconductor optical modulator device that modulates continuous light to be modulated with a modulating electric signal supplied from a transmission line substrate and outputs a modulated optical signal; and a semiconductor laser device that oscillates and outputs laser light as continuous light to be modulated and inputs oscillation output of the light into the semiconductor optical modulator device. The semiconductor laser device and the semiconductor optical modulator device are monolithically integrated.

According to the above mentioned invention, the monolithically integrated semiconductor laser device and the semiconductor optical modulator device oscillates and output the continuous light, and the continuous light is input into the semiconductor optical modulator device.

In the optical module according to still another aspect of the present invention the transmission line substrate includes a semiconductor integrated drive unit that generates the modulating electric signal and outputs the signal to the semiconductor optical modulator device.

According to the above mentioned invention, the semiconductor integrated drive unit of the transmission line substrate oscillates and output the continuous light, and the continuous light is input into the semiconductor optical modulator device.

An optical transmitter according to still another aspect of the present invention includes an optical module, the optical module including an electric-field-absorbing-type semiconductor optical modulator device that modulates the continuous light to be modulated with a modulating electric signal supplied from a transmission line substrate, and outputs a modulated optical signal; and a semiconductor laser device that oscillates and outputs a laser light as the continuous light to be modulated, and inputs oscillation output of the light into the semiconductor optical modulator device, wherein the semiconductor laser device is monolithically integrated with the semiconductor optical modulator device. The optical transmitter includes an injection current control unit that controls an injection current to the semiconductor laser device.

According to the above mentioned invention, the injection current control unit controls the injection current for the semiconductor laser device to vary the intensity of the modulated light signal.

The optical transmitter according to still another aspect of the present invention further includes a photodiode device that monitors a light beam emitted rearward from the semiconductor laser device. The injection current control unit controls the injection current using an output monitored in the photodiode device.

According to the above mentioned invention, the injection current control unit controls the injection current using an output monitored in the photodiode device.

In the optical transmitter according to still another aspect of the present invention the transmission line substrate includes a semiconductor integrated drive unit that generates the modulating electric signal.

According to the above mentioned invention, the semiconductor integrated drive unit of the transmission line substrate oscillates and output the continuous light, and the continuous light is input into the semiconductor optical modulator device.

In the optical transmitter according to still another aspect of the present invention further includes the transmission line substrate includes a semiconductor integrated drive unit that generates the modulating electric signal.

According to the above mentioned invention, the semiconductor integrated drive unit of the transmission line substrate oscillates and output the continuous light, and the continuous light is input into the semiconductor optical modulator device.

The optical transmitter according to still another aspect of the present invention further includes an offset voltage control unit that controls an offset voltage of a modulating electric signal for the semiconductor optical modulator device based on a current monitored in the photodiode device.

According to the above mentioned invention, the offset voltage control unit controls an offset voltage of a modulating electric signal for the semiconductor optical modulator device based on a current monitored in the photodiode device.

### BRIEF DESCRIPTION OF THE DRAWINGS

Fig. 1 illustrates an optical transmitter according to a first embodiment of the present invention; Fig. 2 is a graph of light intensity against an injection current; Fig. 3 is a graph of the intensity of the received light against code error rate when the light is transmitted through an optical fiber (90 km) and in a case of facing arrangement (close disposition) of an optical transmitter and an optical receiver, if the light intensity is 0 dBm; Fig. 4 is a graph of evaluation of minimum receiving sensitivity against power penalty in the case of the facing arrangement if the light intensity is changed; Fig. 5 illustrates an optical module according to a second embodiment of the present invention; Fig. 6 illustrates an optical module according to a third embodiment of the present invention; Fig. 7 illustrates an optical module according to a fourth embodiment of the present invention; Fig. 8 illustrates an optical module according to a fifth embodiment of the present invention; and Fig. 9 illustrating the conventional optical transmitter.

### BEST MODE FOR CARRYING OUT THE INVENTION

Exemplary embodiments of the optical transmitter and the optical module according to the present invention will be explained in detail below with reference to the accompanying drawings.

### First Embodiment:

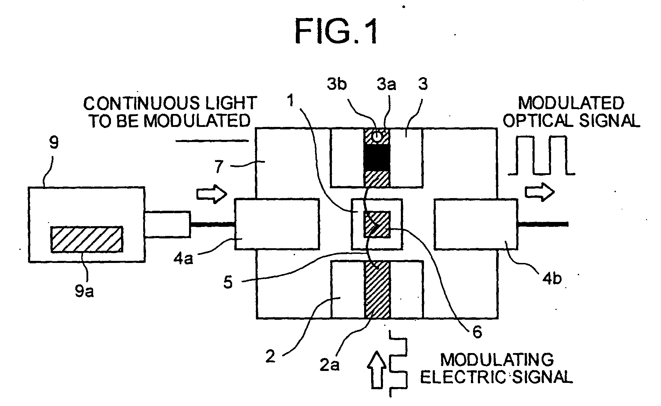

Fig. 1 illustrates an optical transmitter according to a first embodiment of the present invention. This optical transmitter includes a semiconductor laser module 9 with a light intensity varying unit 9a. The rest of the components have the same configuration and they perform the same operations as those of the conventional optical transmitter as shown in Fig. 9.

The optical module 7 includes the electric-field-absorbing-type semiconductor optical modulator device 1 having the quantum confinement Stark effect and the Franz-Keldysh effect. The optical module 7 also includes the transmission line substrate 2 having the high-frequency transmission line 2a for supplying a high-frequency electric signal as a modulation signal to the semiconductor optical modulator device 1. The terminating resistor substrate 3 has the resistor 3a for impedance matching and the through hole 3b. A transmission line connects the resistor 3a to the through hole 3b. The input optical coupling system 4a inputs the continuous optical signals, which are to be modulated, into the semiconductor optical modulator device 1. The output optical coupling system 4b outputs the light modulated by the semiconductor optical modulator device 1 to the outside. The wire 5 electrically connects the transmission line substrate 2 and the terminating resistor substrate 3 to the input electrode 6 on the semiconductor optical modulator device 1. The semiconductor laser module 9 generates the continuous light and inputs the light into the input optical coupling system 4a.

The back side of the terminating resistor substrate 3 serves as a grounding electrode. The resistor 3a is electrically connected to this grounding electrode via the through hole 3b. The back side of the semiconductor optical modulator device 1 serves also as a grounding electrode, and therefore the semiconductor optical modulator device 1 and the resistor 3a are electrically connected in parallel to each other. The semiconductor optical modulator device 1 has high impedance, and therefore a resistance of the resistor 3a becomes an internal impedance of the optical module 7. Consequently, the impedances are matched between the optical module 7 and the transmission line substrate 2 for transmitting the high-frequency modulating electric signal, which allows highly efficient optical modulation.

The semiconductor laser module 9 inputs the continuous light as continuous laser light into the electric-field-absorbing-type semiconductor optical modulator device 1 via the input optical coupling system 4a. A high-frequency electric signal as a modulation signal is applied to the semiconductor optical modulator device 1 through the transmission line substrate 2. The amount of absorption of the laser light varies depending upon the magnitude of the voltage. Thus, the input laser light is subjected to intensity modulation corresponding to the voltage and output to the outside as a modulated optical signal via the output optical coupling system 4b.

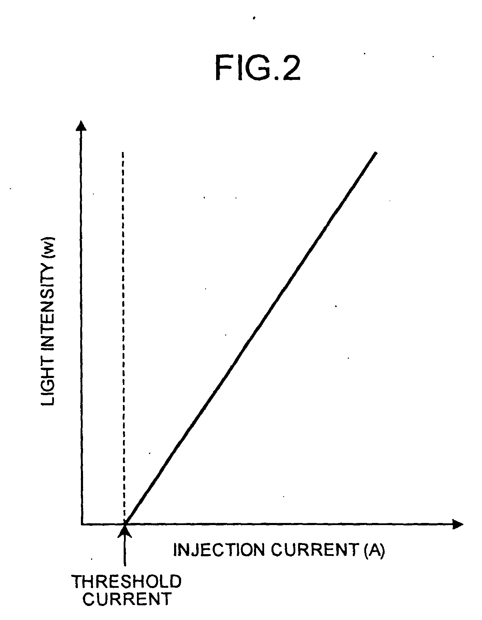

Fig. 2 is a graph of light intensity against an injection current to a semiconductor laser device of the semiconductor laser module 9. The horizontal axis of the graph denotes the injection current in amperes (A) and the vertical axis thereof denotes optical output watts (w). The graph illustrates the fact that the light intensity increases steeply as the injection current exceeds a threshold. The light intensity varying unit 9a continuously controls the injection current to the semiconductor laser device to continuously control the light intensity of the continuous laser light output from the semiconductor laser module 9.

As a result of the continuously control the light intensity by the light intensity varying unit 9a, the intensity of the light input from the semiconductor optical modulator device 1, which is the electric-field-absorbing-type, into the optical module 7 varies continuously. This may cause degradation in quality of a modulated optical signal output from the optical transmitter. To solve the problem, a normal dispersion fiber often used for long-distance transmission was used as a scale by which the quality of the modulated optical signal was measured, and thereby optical transmission characteristics were evaluated during the long-distance transmission. Furthermore, minimum light receiving sensitivity in a case of facing arrangement of the optical transmitter and an optical receiver was evaluated.

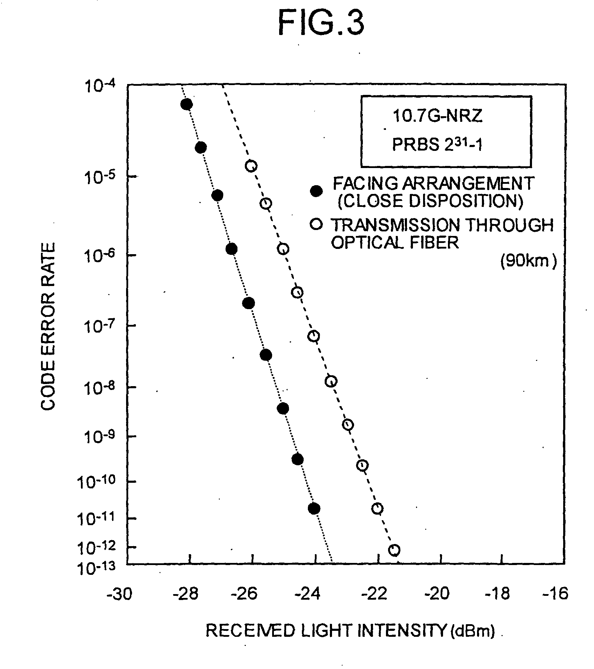

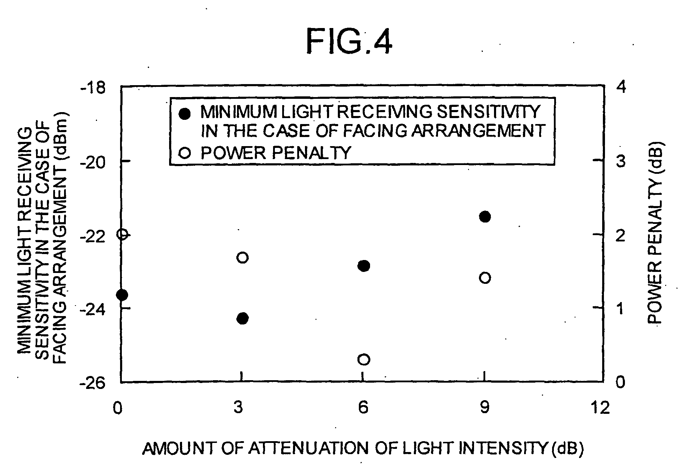

As conditions for evaluation of the optical transmission characteristics, a NRZ (Not Return to Zero) signal of 10.7 Gbit/s as PN 31-stage pseudorandom code was employed as a modulating electric signal, and the normal dispersion fiber of 90 km was used for the transmission path. The total amount of dispersion of the transmission path was about 1,620 ps/nm. Moreover, the light intensity varying unit 9a controlled the light intensity of the semiconductor laser module 9 so that the intensity of the light output from the optical module 7 having the semiconductor optical modulator device 1 is 0 dBm, -3 dBm, -6 dBm, and -9 dBm, and the optical output was measured by the optical receiver. The results of the measurement are shown in Fig. 3 and Fig. 4.

Fig. 3 is a graph of the intensity of received light against the code error rate characteristics when the light is transmitted through an optical fiber (90 km) and in the case of the facing arrangement (close disposition) if the light intensity is 0 dBm. The received light intensity during transmission through the optical fiber is the light intensity at a receiving end of the fiber during the transmission through the optical fiber, and is plotted with. hollow circles in Fig. 3. The received light intensity in the case of the facing arrangement indicates a light intensity at a receiving end of the optical receiver when the fiber is not used, and is plotted with solid circles in Fig. 3. As shown in Fig. 3, even during the light transmission through the optical fiber, degradation is found but it is only about 2 dB at the maximum as compared to the case of the facing arrangement. Thus, a sufficient relationship can be obtained between the received light intensity and the code error rate.

Fig. 4 illustrates the results of evaluation of minimum receiving sensitivity and power penalty in the case of the facing arrangement when the light intensity is changed. The minimum light receiving sensitivity is defined as an intensity of an input light to the optical receiver when the code error rate is 10⁻¹² in the case of the facing arrangement. The power penalty is defined as a difference in intensities of the input light to the optical receiver between the case after the transmission and the case of the facing arrangement when the code error rate is 10⁻¹². Sufficient optical transmission characteristics having power penalty of 2 dB or less can be obtained when the intensity of the light output from the optical module 7 is in a range from -9 dBm to 0 dBm. Thus, in the optical transmitter according to the first embodiment, although the light intensity of the light input into the optical module 7 changes continuously, there is no degradation of the quality of the modulated optical signal output from the optical transmitter.

As explained above, according to the first embodiment, the variable optical attenuator 8 is removed from the transmitter having the variable optical attenuator 8 and the semiconductor laser module 9, and the light intensity varying unit 9a is provided in the semiconductor laser module 9. Therefore, it is possible to realize the function of variably controlling the output intensity of the modulated optical signal, and it is also possible to obtain the compact optical transmitter excellent in the optical transmission characteristics without sacrificing the number of components.

### Second Embodiment:

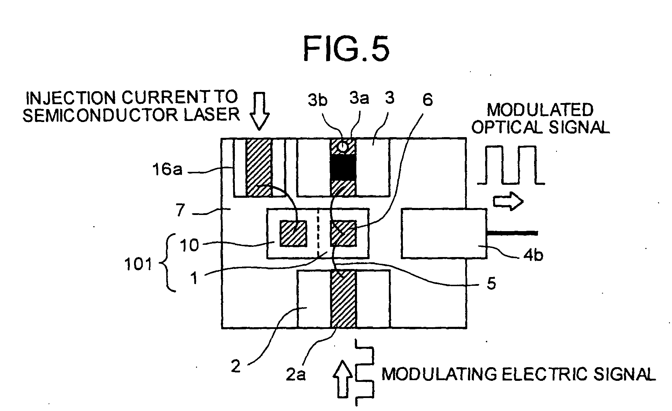

Fig. 5 illustrates an optical transmitter according to a second embodiment of the present invention. This optical transmitter includes an optical module 7. The optical module 7 includes an optical-modulator-integrated semiconductor laser device 101 instead of the semiconductor optical modulator device 1. The optical-modulator-integrated semiconductor laser device 101 includes monolithically integrated the electric-field-absorbing-type semiconductor optical modulator device 1 and a semiconductor laser device 10. Furthermore, the optical module 7 has an injection current control electrode 16a provided on a substrate thereof. It should be noted that the semiconductor laser module 9 and the input optical coupling system 4a are not provided to the optical module 7. The rest of the components are the same as those in the first embodiment as shown in Fig. 1, and the same reference numerals are assigned to the same components.

In the first embodiment of Fig. 1, the input optical coupling system 4a is required on a light incident side in order to efficiently enter continuous laser light into the semiconductor optical modulator device 1. In addition, the semiconductor laser module 9 including the semiconductor laser device that generates continuous laser light is required as a discrete unit.

According to the optical module 7 of the second embodiment, because of the provision of the optical-modulator-integrated semiconductor laser device 101, the input optical coupling system 4a is not required so that the number of components and the number of assembling steps can be reduced. Moreover, as the input optical coupling system 4a is not provided, there is no optical loss. Furthermore, when this optical module 7 is employed in the optical transmitter, the number of components can be reduced. Moreover, it is possible to realize the function of variably controlling the light intensity of the optical transmitter without provision of the variable optical attenuator 8. Further, it is possible to obtain the optical transmitter and the optical module that are compact in size and excellent in optical transmission characteristics.

The optical module 7 of the second embodiment is provided with the semiconductor laser device that oscillates and outputs laser light as continuous light to be modulated, and the semiconductor laser device and the semiconductor optical modulator device 1 are monolithically integrated. Therefore, the function of variably controlling the output intensity of the modulated optical signal can be realized without provision of the variable optical attenuator 8 as shown in the example of the conventional technology of Fig. 9 and without provision of the semiconductor laser module 9 and the input optical coupling system 4a as shown in Fig. 1. Thus, it is possible to obtain the optical module that is compact in size due to the reduced number of components and is excellent in optical transmission characteristics.

### Third Embodiment:

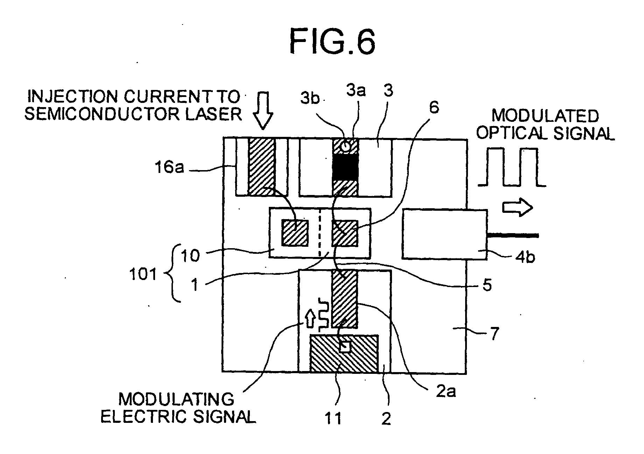

Fig. 6 illustrates an optical transmitter according to a third embodiment of the present invention. This optical transmitter includes an optical module 7. This optical module 7 includes a semiconductor integrated drive circuit 11 that generates an electric signal as a modulation signal. The rest of the components are the same as those in the second embodiment as shown in Fig. 5, and the same reference numerals are assigned to the same components.

Because of the provision of the semiconductor integrated drive circuit 11, it is possible to reduce an electrical length between the drive circuit 11 and the electric-field-absorbing-type semiconductor optical modulator device 1. If the S22 characteristic as a reflection coefficient at an output of the drive circuit 11 and the S11 characteristic as a reflection coefficient at an input of the semiconductor optical modulator device 1 are insufficiently provided, a high-frequency electric signal is reflected in a multiple way between the drive circuit 11 and the semiconductor optical modulator device 1 via the transmission line substrate 2, which may cause degradation in high frequency property. However, as explained above, when the electrical length is reduced by mounting the drive circuit 11 in the optical module 7, the influence of the multiple-reflection can be prevented from being exerted on a desired frequency band but can be exerted on the high frequency side. Furthermore, the function of being excellent in high frequency property and variably controlling the intensity of light from the optical transmitter can be realized without provision of the variable optical attenuator 8. Therefore, it is possible to obtain the compact optical module excellent in optical transmission characteristics.

In the optical module according to the third embodiment, the semiconductor integrated drive unit that generates a modulating electric signal and outputs the signal to the semiconductor optical modulator device 1 is mounted on the transmission line substrate 2. Therefore, it is possible to obtain the optical module that is excellent in high frequency property of the modulating electric signal, is compact in size due to the reduced number of the components, and is excellent in optical transmission characteristics.

### Fourth Embodiment:

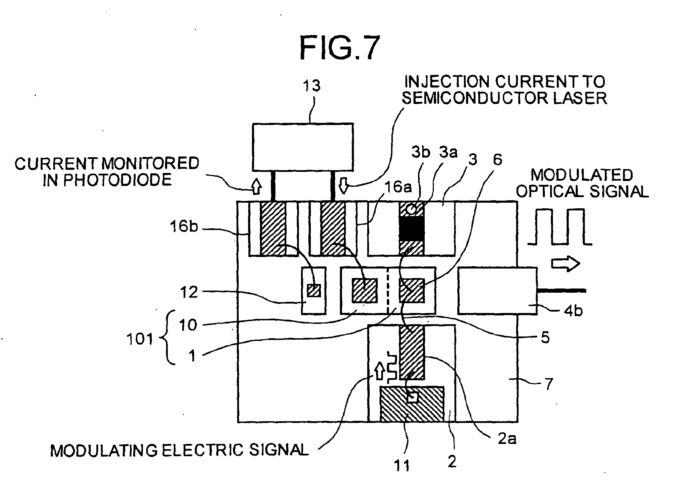

Fig. 7 illustrates an optical transmitter according to a fourth embodiment of the present invention. This optical transmitter includes an optical module 7. This optical module 7 includes a photodiode device 12 that detects a light beam emitted rearward from the semiconductor laser device 10. The optical module 7 also includes an injection current control circuit 13, the injection current control electrode 16a, and the monitor electrode 16b that control an injection current to the semiconductor laser device 10 based on a current monitored in the photodiode device 12. The rest of the components are the same as those in the third embodiment as shown in Fig. 6, and the same reference numerals are assigned to the same components.

In the fourth embodiment, the photodiode device 12 is provided on the rear side of the optical-modulator-integrated semiconductor laser device 101, and therefore the photodiode device 12 does not affect the modulated optical signal output from the semiconductor optical modulator device 1. Furthermore, the photodiode device 12 detects a light beam emitted rearward from the semiconductor laser device 10. Specifically, the beam is perfectly proportional to the intensity of light output from the semiconductor laser device 10 to the semiconductor optical modulator device 1. A current value of the detected beam is then sent to the injection current control circuit 13, and thereby the injection current control circuit 13 can control an injection current to the semiconductor laser device 10. Since these semiconductor laser device 10, injection current control circuit 13, and photodiode device 12 form a feedback control loop, it is possible to strictly control light intensity of the modulated optical signal output from the optical module 7. Therefore, the function of strictly and variably controlling the intensity of light from the optical transmitter can be realized, thus obtaining the compact optical transmitter excellent in optical transmission characteristics.

In the fourth embodiment, the case where the photodiode device 12 and the injection current control circuit 13 are applied to the third embodiment has been explained. Specifically, the photodiode device 12 is provided to monitor optical output of the semiconductor laser device 10, and the injection current control circuit 13 is provided to control an injection current to the semiconductor laser device 10 based on a current in the photodiode device 12. However, it is also possible to control the light intensity of modulated optical signal output from the optical module 7 only by using the injection current control circuit 13 without using the photodiode device 12 that monitors the optical output of the semiconductor laser device 10.

Moreover, in the fourth embodiment, the case where the photodiode device 12 and the injection current control circuit 13 are applied to the third embodiment has been explained. Specifically, the photodiode device 12 is provided to monitor optical output of the semiconductor laser device 10, and the injection current control circuit 13 is provided to control an injection current to the semiconductor laser device 10 based on a current in the photodiode device 12. However, the photodiode device 12 that monitors optical output of the semiconductor laser device 10 and the injection current control circuit 13 that controls an injection current to the semiconductor laser device 10 based on a current in the photodiode device 12 may also be applied to the second embodiment.

Furthermore, in the fourth embodiment, even when the photodiode device 12 that monitors optical output of the semiconductor laser device 10 and the injection current control circuit 13 that controls an injection current to the semiconductor laser device 10 based on a current in the photodiode device 12, are applied to the second embodiment, it is also possible to control the light intensity of modulated optical signal output from the optical module 7 only by using the injection current control circuit 13 without using the photodiode device 12 that monitors the optical output of the semiconductor laser device 10.

In the optical module 7 according to the fourth embodiment, there are provided the photodiode device 12 that monitors optical output of the semiconductor laser device 10 and the injection current control circuit 13 that controls an injection current to the semiconductor laser device 10 based on a current in the photodiode device 12. Therefore, it is possible to provide the function of precisely and variably control the light intensity of modulated optical signal output from the optical module 7, and it is also possible to obtain the compact optical transmitter excellent in optical transmission characteristics.

### Fifth Embodiment:

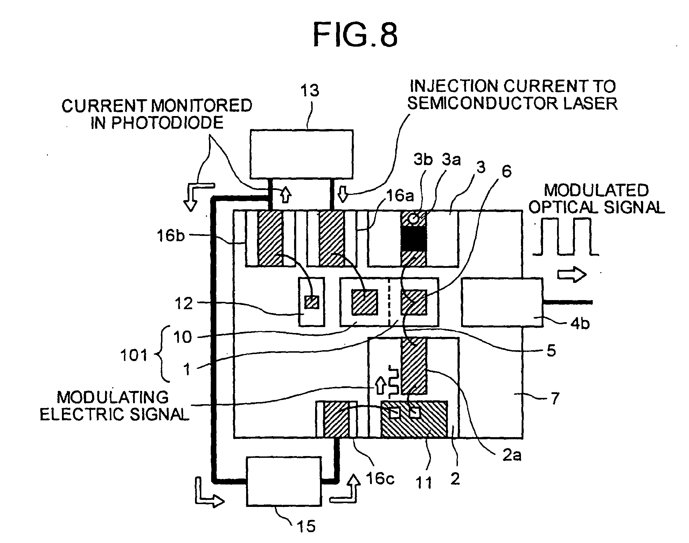

Fig. 8 illustrates an optical transmitter according to a fifth embodiment of the present invention. This optical transmitter includes an optical module 7. This optical module 7 includes an offset voltage control circuit 15 that controls an offset voltage of a modulating electric signal input into the semiconductor optical modulator device 1 based on a current in the photodiode device 12, and also includes an offset voltage control electrode 16c. The rest of the components are the same as those in the fourth embodiment as shown in Fig. 7, and the same reference numerals are assigned to the same components.

A photocurrent is produced in the electric-field-absorbing-type semiconductor optical modulator device 1 when a photon is converted to an electron according to the intensity of light to be modulated that is input into the semiconductor optical modulator device 1. Further, in the semiconductor optical modulator device 1, there exists a layer having a parasitic resistance component on an upper layer of an absorption layer that actually absorbs incident light. Therefore, the photocurrent flows through a parasitic resistance part, and thereby a voltage drop occurs. That is, when the light to be modulated is input into the semiconductor optical modulator device 1, the photocurrent is produced from the absorption layer. The offset voltage of the effective modulating electric signal to be applied to the absorption layer becomes different from the offset voltage of the modulating electric signal to be applied to the semiconductor optical modulator device 1. The difference between the offset voltages is changed according to the light intensity of the light to be modulated that is input into the semiconductor optical modulator device 1. On the other hand, light waveforms and optical transmission characteristics of the modulated optical signal output from the semiconductor optical modulator device 1 are changed by the offset voltage of the modulating electric signal to be input into the semiconductor optical modulator device 1. Therefore, when the function of variably controlling the intensity of light from the optical transmitter is realized by controlling the intensity of the light to be modulated, the various characteristics of the modulated optical signal may be changed.

The photodiode device 12 monitors a light beam emitted rearward from the semiconductor laser device 10. Specifically, the beam is perfectly proportional to the intensity of light output from the semiconductor laser device 10 to the semiconductor optical modulator device 1. Then, the offset voltage control circuit 15 performs feedback control on the offset voltage of the modulating electric signal for the semiconductor optical modulator device 1 based on the current value of the beam. Therefore, the various characteristics of the modulated optical signal output from the optical module 7 can be stabilized regardless of changes in the injection current. Thus, it is possible to realize the function of precisely and variably controlling the intensity of light from the optical transmitter, and it is also possible to obtain the optical transmitter and the optical module that are compact in size and have stable optical transmission characteristics.

In the fifth embodiment, the case where the offset voltage control circuit 15 is applied to the fourth embodiment has been explained. Specifically, the offset voltage control circuit 15 controls an offset voltage of the modulating electric signal based on the current value of a rearward beam of the semiconductor laser device 10 that is monitored by the photodiode device 12. However, the offset voltage control circuit 15 can also perform feedback control on the offset voltage of the modulating electric signal without using the semiconductor integrated drive unit that generates a modulating electric signal and outputs the signal to the semiconductor optical modulator device 1.

In the optical module 7 according to the fifth embodiment, the rearward beam of the semiconductor laser device 10 is monitored by the photodiode device 12 to control an offset voltage of a modulating electric signal based on a current value of the beam. Therefore, the various characteristics of the modulated optical signal output from the optical module 7 are stabilized regardless of changes in the injection current. Further, by realizing the function of precisely and variably controlling the intensity of light from the optical transmitter, it is possible to obtain the compact optical transmitter having stable optical transmission characteristics.

As explained above, according to the present invention, the semiconductor laser module having the light intensity varying unit controls the light intensity of modulated optical signal based on the intensity of continuous light to be modulated. Therefore, it is possible to realize the function of variably controlling the output intensity of the modulated optical signal without providing the variable optical attenuator in a part of the output optical coupling system or outside it is possible to obtain a low-cost and compact optical module and a low-cost and compact optical transmitter excellent in optical transmission characteristics.

According to the optical module of the next invention, the optical module is provided with the semiconductor laser device monolithically integrated with the semiconductor optical modulator device. The semiconductor laser device oscillates and outputs laser light as continuous light to be modulated and inputs oscillation output of thee light into the semiconductor optical modulator device. Therefore, it is advantageously possible to realize the function of variably controlling the output intensity of the modulated optical signal without providing the variable optical attenuator in a part of the output optical coupling system or outside the optical module and also without providing the semiconductor laser module and the input optical coupling system. It is also advantageously possible to obtain the optical module that is compact in size due to the further reduced number of components and is excellent in optical transmission characteristics.

According to the optical module of the next invention, the semiconductor integrated drive unit is mounted on the transmission line substrate of the optical module. The semiconductor integrated drive unit generates a modulating electric signal and outputs the signal to the semiconductor optical modulator device. Therefore, it is possible to obtain an optical module that is excellent in high frequency property of the modulating electric signal, is compact in size due to the reduced number of components, and is excellent in optical transmission characteristics.

According to the optical transmitter of the next invention, the injection current control unit controls an injection current to the semiconductor laser device to variably control the light intensity of a modulated optical signal. Therefore, moreover, it is possible to provide the function of variably controlling the light intensity of the modulated optical signal output from the optical module and also to obtain the compact optical transmitter excellent in optical transmission characteristics.

According to the optical transmitter of the next invention, the injection current control unit controls an injection current to the semiconductor laser device using monitored output of the photodiode device to variably control the light intensity of the modulated optical signal. Therefore, it is advantageously possible to provide the function of precisely and variably controlling the light intensity of the modulated optical signal output from the optical module, and also to obtain the compact optical transmitter excellent in optical transmission characteristics.

According to the optical transmitter of the next invention, the semiconductor integrated drive unit is mounted on the transmission line substrate of the optical module. The semiconductor integrated drive unit generates a modulating electric signal and outputs the signal to the semiconductor optical modulator device. Therefore, it is advantageously possible to obtain the optical transmitter, by using the optical module, that is excellent in high frequency property of the modulating electric signal, is compact in size due to the reduced number of components, and is excellent in optical transmission characteristics.

According to the optical transmitter of the next invention, the semiconductor integrated drive unit is mounted on the transmission line substrate of the optical module. The semiconductor integrated drive unit generates a modulating electric signal and outputs the signal to the semiconductor optical modulator device. Therefore, it is advantageously possible to obtain the optical transmitter, by using the optical module, that is excellent in high frequency property of the modulating electric signal, is compact in size due to the reduced number of components, and is excellent in optical transmission characteristics.

According to the optical transmitter of the next invention, the offset control unit controls an offset voltage of a modulating electric signal for the semiconductor optical modulator device based on a current monitored in the photodiode device. Therefore, the various characteristics of the modulated optical signal output from the optical module can be stabilized regardless of changes in the injection current. Thus, by realizing the function of precisely and variably controlling the intensity of light from the optical transmitter, it is advantageously possible to obtain the compact optical transmitter having stable optical transmission characteristics.

### INDUSTRIAL APPLICABILITY

As explained above, the optical transmitter and the optical module according to the present invention are suitable for the field of high-speed optical communication and long-haul optical communication as a compact optical device having stable optical transmission characteristics.

## Claims

1. An optical transmitter, comprising:
a semiconductor laser module that outputs continuous light to be modulated; and
an optical module including an electric-field-absorbing-type semiconductor optical modulator device that modulates the continuous light with a modulating electric signal supplied from a transmission line substrate and outputs a modulated optical signal,
wherein a light intensity varying unit that variably controls intensity of the continuous light is provided in the semiconductor laser module to thereby variably control light intensity of the modulated optical signal.

2. An optical module, comprising:
an electric-field-absorbing-type semiconductor optical modulator device that modulates continuous light to be modulated with a modulating electric signal supplied from a transmission line substrate and outputs a modulated optical signal; and
a semiconductor laser device that oscillates and outputs laser light as continuous light to be modulated and inputs oscillation output of the light into the semiconductor optical modulator device,
wherein the semiconductor laser device and the semiconductor optical modulator device are monolithically integrated.

3. The optical module according to claim 2, wherein the transmission line substrate includes a semiconductor integrated drive unit that generates the modulating electric signal and outputs the signal to the semiconductor optical modulator device.

4. An optical transmitter comprising:
an optical module, the optical module including
an electric-field-absorbing-type semiconductor optical modulator device that modulates the continuous light to be modulated with a modulating electric signal supplied from a transmission line substrate, and outputs a modulated optical signal; and
a semiconductor laser device that oscillates and outputs a laser light as the continuous light to be modulated, and inputs oscillation output of the light into the semiconductor optical modulator device, wherein the semiconductor laser device is monolithically integrated with the semiconductor optical modulator device, the optical transmitter comprising:
an injection current control unit that controls an injection current to the semiconductor laser device.

5. The optical transmitter according to claim 4, further comprising a photodiode device that monitors a light beam emitted rearward from the semiconductor laser device, wherein
the injection current control unit controls the injection current using an output monitored in the photodiode device.

6. The optical transmitter according to claim 5, further comprising an offset voltage control unit that controls an offset voltage of the modulating electric signal based on a current monitored in the photodiode device.

7. The optical transmitter according to claim 4, wherein the transmission line substrate includes a semiconductor integrated drive unit that generates the modulating electric signal.

8. The optical transmitter according to claim 5, wherein the transmission line substrate includes a semiconductor integrated drive unit that generates the modulating electric signal.

9. The optical transmitter according to claim 8, further comprising an offset voltage control unit that controls an offset voltage of a modulating electric signal for the semiconductor optical modulator device based on a current monitored in the photodiode device.
